# EUROPÄISCHE PATENTSCHRIFT

(11) **EP 2 725 052 B1**
(45) Veröffentlichungstag und Bekanntmachung des Hinweises auf die Patenterteilung: **16.01.2019**
(21) Anmeldenummer: 12189600.5
(22) Anmeldetag: 23.10.2012
(51) Int. Cl.: C08G 69/16, C08G 69/46, B01J 19/16, B01J 19/24

(54) **Repolymerisationsvorrichtung**
Repolymerisation device
Dispositif de repolymérisation

(43) Veröffentlichungstag der Anmeldung: 30.04.2014
(73) Patentinhaber: Uhde Inventa-Fischer GmbH, 13509 Berlin (DE)
(72) Erfinder: Janzi, Viktor, 7403 Rhäzüns (CH)
(74) Vertreter: Pfenning, Meinig & Partner mbB

(56) Entgegenhaltungen:
- EP-A1- 0 459 206
- EP-B1- 0 847 414

## Beschreibung

Die vorliegende Erfindung betrifft eine Repolymerisationsvorrichtung zum Aufarbeiten von Oligomer-haltigen Extraktwässern, die bei Verfahren zur kontinuierlichen Herstellung von textilem Polyamid 6 aus ε-Caprolactam aus den Extraktionsstufen stammen. Mittels der erfindungsgemäßen Repolymerisationsvorrichtung wird das Extraktwasser aus einer kontinuierlichen Eindampfstufe in einer gezielten Weise über mehrere Stufen behandelt. Es erfolgt eine Aufkonzentrierung des Extraktwassers durch Verdampfung von überschüssigem Wasser, Starten der Ringöffnungs- und PolyadditionsReaktionen und Abbau der Oligomeren.

Bei der Herstellung von PA6 wird das entstehende Endprodukt PA6 in der Regel in einer Extraktionsstufe einer wässrigen Extraktion (Wäsche) unterzogen, um Monomere (ε-Caprolactam) und Oligomere aus dem rohen PA6-Granulat abzutrennen. Dieser Extraktionsvorgang ist insbesondere deshalb essentiell, da sich enthaltene monomere bzw. oligomere Bestandteile nachteilig auf die Produkteigenschaften des PA6 auswirken können. Die dabei anfallenden Extraktwässer enthalten Caprolactam sowie Oligomere und sollen bevorzugt wieder der Polymerisation zugeführt werden, um einen effizienten Verfahrensablauf zu gewährleisten.

Im Stand der Technik sind Verfahren zur Herstellung von Polyamid 6 unter Verwendung von Extraktwassern aus der PA6-Herstellung und Zugabe von Frischlactam bekannt. So wird in der EP 0 459 206 A1 ein Verfahren vorgeschlagen, bei dem das Extraktwasser einer hydrolytischen Druck- und Temperaturstufe unterzogen wird bevor es der Polymerisation zugeführt wird. Bei dem Verfahren nach dieser Offenlegungsschrift wird (Beispiel 1) so vorgegangen, dass das Extraktwasser in einem ersten Schritt konzentriert wird und dass dann in einer weiteren Stufe in einem Autoklaven über eine Zeitspanne von vier Stunden eine Behandlung durchgeführt wird, die dazu führt, dass eine Mischung mit 1,3 Gew.-% zyclischen Dimer erhalten wird. Das Verfahren nach der EP 0 459 206 A1 ist somit verfahrenstechnisch aufwendig, da mit einem Autoklaven gearbeitet werden muss und zum anderen ist der in dem Extraktwasser erhaltene Anteil an zyclischem Dimer für die Herstellung von hochwertigen Polyamidprodukten z.B. von Polyamidgarnen zu groß. Auch ist das Verfahren nach der EP 0 459 206 A1 kostenaufwendig.

Ein anderes Verfahren zur Herstellung von Polyamid 6 bei dem Extraktwasser aus der PA6-Produktion verwendet wird, ist in der EP 0 847 414 B1 offenbart. Die EP 0 847 414 B1 beschreibt ein zweistufiges Verfahren, wobei sowohl die erste und die zweite Stufe als Druckstufe ausgebildet sind. Bei diesem Verfahren wird dem Lactam/Oligomeren-Gemisch bereits in der ersten Stufe Frischlactam zugeführt (siehe Beispiel 1 sowie Figur). Dadurch wird nicht nur ein aufwändiger apparativer Aufwand erforderlich, um ein derartiges Verfahren durchzuführen, sondern der Oligomerengehalt des Rücklactams kann auch nicht soweit reduziert werden, dass eine Herstellung von POY-Garnen möglich ist.

Es ist daher Aufgabe der vorliegenden Erfindung, eine Repolymerisationsstufe anzugeben, mit der in Extraktwässern enthaltene Oligomere zu Monomeren abgebaut werden können, sodass diese Produkte erneut in ein entsprechendes Polymerisationsverfahren aufgegeben werden können. Die Vorrichtung soll so ausgebildet sein, dass sie zur Nachrüstung von bestehenden Anlagen geeignet ist.

Diese Aufgabe wird mit der Repolymerisationsvorrichtung gemäß den Merkmalen des Patentanspruchs 1 gelöst. Die abhängigen Patentansprüche stellen dabei vorteilhafte Weiterbildungen dar.

Die Erfindung betrifft somit eine Repolymerisationsvorrichtung, mit der aus der PA6-Herstellung herrührende Extraktwässer, die insbesondere Oligomere von PA6 und/oder monomeres ε-Caprolactam enthalten, aufgearbeitet werden können. Über den Zulauf kann Extraktwasser zugeführt werden. Die erfindungsgemäße Repolymerisationsvorrichtung betrifft somit einen Teil einer Produktionsanlage für PA6. Insbesondere kann die Repolymerisationsvorrichtung mit einem Polykondensationsreaktor für PA6 verbindbar sein, d.h. diesem vorgeschaltet sein, sodass der Polykondensationsreaktor zumindest teilweise mit den aufgearbeiteten Extraktwässern versorgt werden kann. Die Repolymerisationsvorrichtung gemäß der vorliegenden Erfindung umfasst in Prozessrichtung aufeinander folgend mindestens einen ersten Druckreaktor, der Mischelemente und eine Heizvorrichtung aufweist, sowie mindestens einen zweiten Druckreaktor, der innenliegende Strömungseinbauten umfasst. Die Strömungseinbauten dienen insbesondere der Vergleichmäßigung der Verweilzeiten der durch den zweiten Reaktor durchfließenden Extraktwässer.

Der Vorteil der erfindungsgemäßen Vorrichtung ist darin zusehen dass durch den vorgeschlagenen Aufbau eine kompakte Bauweise und eine ökonomische Betriebsweise möglich ist. Die Vorrichtung zeichnet sich weiter dadurch aus dass sie problemlos mit bestehenden PA6 Anlagen kombiniert werden kann.

Nachfolgend beziehen sich alle Angaben in Gew.-% auf das gesamte Extraktwasser, sofern nicht etwas anderes angegeben ist.

Unter Oligomeren im Sinne der Erfindung werden Oligomere verstanden die sich in der Extraktion durch den Waschprozess aus dem PA6-Granulat herauslösen lassen, d.h. sowohl Dimere (n=2), Trimere (n=3) wie auch Tetramere (n=4) und nennenswert Oligomere bis zu n=9. Die Analyse kann mittels der HPLC-Methode (engl. High Pressure Liquid Chromatography) erfolgen. Gemäß einer bevorzugten Ausführungsform weist der erste Druckreaktor dabei einen kopfseitigen Zulauf für die Extraktwässer auf und einen bodenseitigen Ablauf, mit dem die im ersten Druckreaktor aufgearbeiteten Extraktwässer dem ersten Druckreaktor wieder entnommen werden können.

Der zweite Druckreaktor ist dabei dem ersten Druckreaktor nachgeschaltet, bevorzugt wird der zweite Druckreaktor ebenso kopfseitig gespeist und weist einen bodenseitigen Auslass auf.

Weiter ist es vorteilhaft, wenn der erste und der zweite Druckreaktor gleichzeitig mit einer Rektifikationskolonne verbunden sind. Ebenso ist es möglich, dass jeder Reaktor mit einer individuellen Rektifikationskolonne verbunden ist. Hierzu können der erste und der zweite Druckreaktor einen kopfseitigen Gasauslas oder Brüdenstutzen aufweisen, der mit der Rektifikationskolonne verbunden ist. Mit der Rektifikationskolonne können leicht flüchtige Substanzen aus den Extraktwässern entfernt werden. Die Brüden aus der Kolonne werden über ein Regelventil entspannt und kondensiert.

Weiter ist es vorteilhaft, wenn der erste Druckreaktor und der zweite Druckreaktor über einen Strömungsregler verbunden sind. Dieser Strömungsregler kann beispielsweise ein Ventil sein, das auch aktiv durch den Flüssigkeitsstand im zweiten Reaktor gesteuert werden kann. Beispielsweise kann über die aktive Steuerung vorgesehen sein, dass, wenn der Flüssigkeitsstand im zweiten Druckreaktor unter einen vordefinierten Pegel fällt, Extraktwasser aus dem ersten Druckreaktor nachfließt. In diesem Fall ist es bevorzugt, wenn der zweite Druckreaktor zusätzlich noch ein Mittel aufweist, mit dem der Füllstand des Extraktwassers im zweiten Druckreaktor überprüft bzw. kontrolliert werden kann.

Insbesondere sind beide Druckreaktoren als zylindrische Druckbehälter ausgebildet. Der erste Druckreaktor ist als Rührgefäß (CSTR) und der zweite als Reaktor mit Pfropfenströmung unterhalb der Heizvorrichtung konzipiert.

Gemäß einer weiter bevorzugten Ausführungsform kann der zweite Druckbehälter kopfseitig mit einer Heizvorrichtung versehen sein. Die Heizvorrichtung kann dabei derart ausgestaltet sein, dass bereits in den Reaktor eintretendes Extraktwasser auf eine vordefinierte Temperatur erwärmt wird.

Bevorzugt ist ferner, wenn dem ersten Druckreaktor eine Eindampfvorrichtung vorgeschaltet ist, die kopfseitig mit dem Druckreaktor verbunden ist. Die Eindampfvorrichtung ist somit im Zulauf für den ersten Druckreaktor angeordnet. Mit der Eindampfvorrichtung können in den ersten Druckreaktor aufgegebene Extraktwässer bereits vor der ersten Behandlung im Druckreaktor eingedampft werden, hierbei können beispielsweise Wasser oder flüchtige Bestandteile aus den Extraktwässern abgetrennt werden. Insofern kann gemäß dieser Ausführungsform eine bevorzugte Aufkonzentrierung des eigentlichen Rohstoffes für die Repolymerisationsvorrichtung, nämlich PA6-Oligomere, erfolgen.

Weiter ist es vorteilhaft, wenn dem zweiten Druckreaktor eine Mischvorrichtung zur Homogenisierung nachgeschaltet ist. Diese Mischvorrichtung kann mit dem bodenseitigen Auslass des zweiten Druckreaktors verbunden sein. Bevorzugt weist die Mischvorrichtung Mischelemente auf. Die Mischvorrichtung ermöglicht eine Homogenisierung und Vermischung von aus der Repolymerisationsvorrichtung herrührenden Extraktwässern.

Mit der Repolymerisationsvorrichtung gemäß der vorliegenden Erfindung kann erreicht werden, dass durch Druck- und Temperaturbehandlung die in den Extraktwässern enthaltenen vorwiegend zyklischen Oligomere zu Monomeren, dem ε-Caprolactam oder zu kurzkettigen linearen Oligomeren abgebaut werden. Diese reaktiven Spezies können erneut bei der Herstellung von Polyamid 6 eingesetzt werden.

Die erfindungsgemäße Repolymerisationsvorrichtung lässt sich einfach in bestehende Anlagen für die Herstellung von Polyamid 6 integrieren. Derart hergestelltes Polyamid 6 lässt sich dann für die Herstellung von POY-Filamenten (vorverstrecktes Garn, engl. preoriented yarn, POY) einsetzen.

Die vorliegende Erfindung wird anhand der nachfolgenden Figuren näher erläutert, ohne die Erfindung auf die dort beschriebenen speziellen Ausführungsformen zu beschränken.

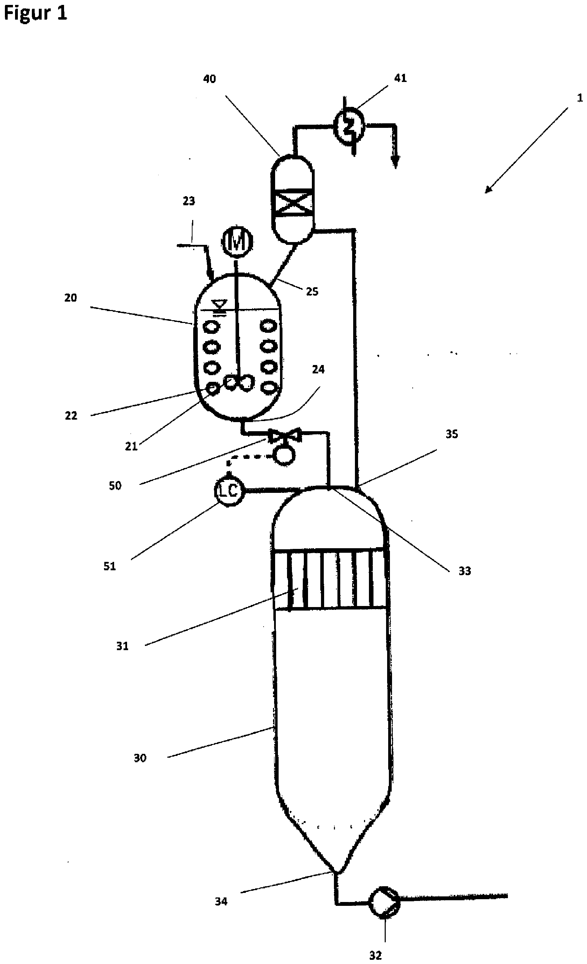

Figur 1 zeigt eine Repolymerisationsvorrichtung 1 gemäß der vorliegenden Erfindung, die einen ersten Druckreaktor 20, sowie dem ersten Druckreaktor 20 nachgeschaltet einen zweiten Druckreaktor 30 umfasst. Der erste Druckreaktor 20 umfasst dabei ein Rührelement 21 sowie eine innen liegende Rohrheizung 22. Der Zulauf 23 des ersten Druckreaktors 20 ist dabei kopfseitig angeordnet, zudem verfügt der erste Druckreaktor 20 über einen bodenseitigen Auslass 24. Das Extraktwasser wird dabei über den Zulauf 23 in den Druckreaktor 20 geführt. Das Extraktwasser enthält bevorzugt max. 7,0 Gew.-% Oligomere. Falls erforderlich kann das Extraktwasser in einer vorgelagerten Stufe durch Eindampfen auf den entsprechenden Gehalt an Oligomeren gebracht werden. Die Behandlung im Druckreaktor 20 wird dabei bevorzugt bei 2-6 bar mit einer Temperatur von 225 bis 255°C über eine Zeitspanne von 3 bis 6 Stunden durchgeführt. Unter diesen Bedingungen erfolgt dabei ein weiterer Abbau der Oligomere. Der zweite Druckreaktor 30 ist dabei mit dem ersten Druckreaktor 20 über eine Leitung verbunden, die den bodenseitigen Auslass 24 des ersten Druckreaktors 20 mit einem kopfseitigen Einlass 33 des zweiten Druckreaktors 30 verbindet. Diese Leitung kann über ein regelbares Ventil 50 verfügen, mit der der Zustrom von Extraktwasser vom ersten Druckreaktor 20 zum zweiten Druckreaktor 30 reguliert werden kann. Die Regulierung kann dabei mittels einer Steuerungsvorrichtung 51 für das Ventil 50 erfolgen.

Der zweite Druckreaktor 30 verfügt unterhalb der Heizvorrichtung über Strömungseinbauten 31, mit denen die Strömung des in den zweiten Druckreaktor 30 einströmenden Extraktwassers vergleichmäßigt werden kann. Im zweiten Druckreaktor 30 erfolgt unter einem Druck von 2-6 bar und einer Temperatur von 240 bis 265 °C über eine Zeitspanne von 8 bis 14 Stunden ein weiterer Abbau der Oligomere z.B. bis auf 1,5 Gew.-%. Der Austrag der aufgearbeiteten Extraktwässer aus dem zweiten Druckreaktor 30 erfolgt dabei über einen bodenseitigen Auslass 34. Zur Förderung der Extraktwässer kann nach dem zweiten Druckreaktor 30 ebenso eine Austragspumpe 32 angeordnet sein.

Das aus dem zweiten Druckreaktor erhaltene Prepolymer kann nun entweder direkt dem VK-Rohr einer Polykondensation zugeführt werden oder es erfolgt vorher eine Vermischung mit Frischlactam in einer Mischvorrichtung, so dass durch die Vermischung mit Frischlactam der Anteil der Oligomeren weiter sinkt. Bei Zugabe der dreifachen Mengen an Frischlactam wird somit dann ein Anteil von 0,5 Gew.-% an Oligomeren erreicht.

Bevorzugt verfügen beide Druckreaktoren 20 und 30 über Brüdenabzüge 25 bzw. 35, mit denen gasförmige Zwischenprodukte bzw. Dämpfe abgezogen werden können. Die Dämpfe können in einer Rektifikationskolonne 40, die den beiden Reaktoren 20 und 30 nachgeschaltet ist, ausgetragen werden.

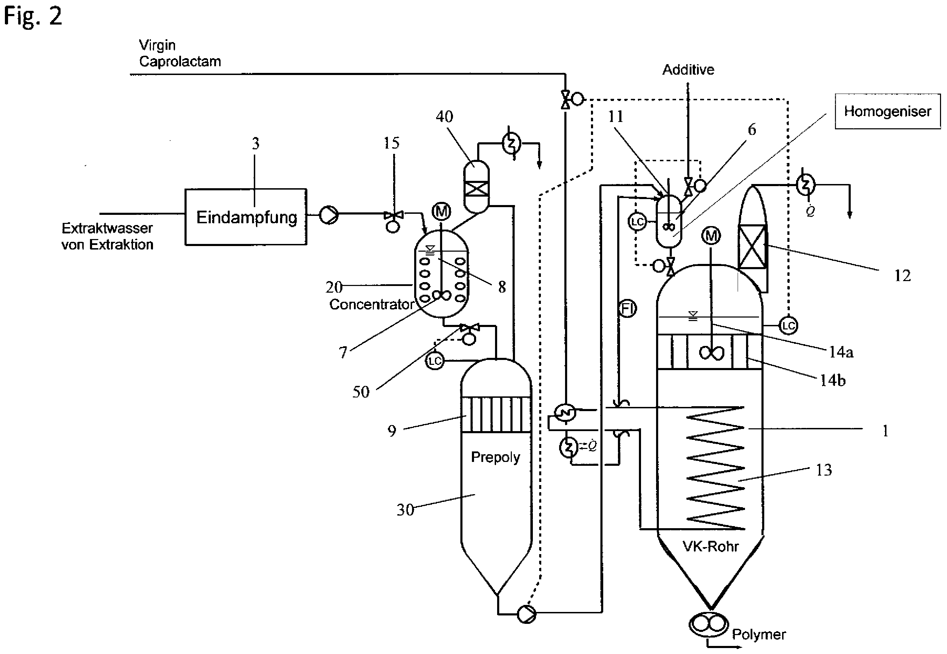

In der Figur 2 ist eine erfindungsgemäße Vorrichtung in Verbindung mit einem Polymerisationsreaktor dargestellt, bei der die Rückgewinnungslinie durch eine Eindampfvorrichtung 3, einer Repolymerisationsstufe bestehend aus einem Druckreaktor 4, einem zweiten Druckreaktor 5 sowie einer Mischvorrichtung 6 gebildet ist, die allesamt direkt hintereinander geschaltet sind. Das aus einer Extraktionsvorrichtung stammende Extraktwasser weist im Beispielsfall einen Wassergehalt von 90 Gew.-% auf. Die Eindampfvorrichtung die gemäß der Ausführungsform nach Figur 2 als Fallfilm-Einheit ausgebildet ist, dampft das Extraktwasser bis auf einen Gehalt von 30 Gew.-% Wasser und 70 Gew.-% Lactam und Oligomere ein. Aus der Mengenbilanz, wenn das Extraktwasser von 3 Prozesslinien in eine Linie geführt wird, ergibt sich ein Oligomerenanteil von 4,9 Gew.-% im aufkonzentrierten Extraktwasser bzw. 7,0 Gew.-% in der organischen Substanz ein.

Die aus dieser ersten Eindampfstufe kommende Mischung weist eine Temperatur am Ausgang der Eindampfvorrichtung von etwa 120° bis 125 C auf. Über einen Strömungsregler 15 wird dann die Mischung in den ersten Druckreaktor 4 geführt. Der Druckreaktor 4 ist als zylindrischer Druckbehälter ausgebildet. Günstige Reaktionsbedingungen in dem ersten Druckreaktor sind dabei eine Temperatur von 225 bis 245° C, ein Druck von 4,0 bar und eine Behandlungsdauer von 5 Stunden. Die Temperatur im ersten Druckreaktor 4 wird dabei durch eine Innenraumrohrheizung 7 eingestellt. Zur Vergleichmäßigung der Mischung und Einbringung der Verdampfungswärme ist ein Rührelement 8 vorgesehen. Über einen Strömungsregler 15' wird dann nach Abschluss der Behandlungsdauer in der zweiten Stufe, d.h. im Druckreaktor 4 die Mischung in den Kopf des zweiten Druckreaktor 5 geführt. Im zweiten Druckreaktor 5 werden günstigerweise wiederum 4,0 bar eingestellt. Die Temperatur liegt zwischen 250 am Reaktorkopf und 260° C am Ausgang und die Behandlungsdauer bei 11 Stunden. Die Behandlungsdauer wird dabei so geführt, dass die Mischung am Ausgang des Druckreaktors 5 einen Oligomerenanteil von max. 1,5 Gew.-% aufweist. Zur sicheren Betriebsweise der beiden Druckreaktoren 4, 5 ist eine Rektifikationskolonne 10 vorgesehen. Die Kolonne 10 ist bevorzugt so angeordnet, dass diese mit beiden Druckreaktoren 4, 5 gleichzeitig verbunden ist, sodass geringe Investitionskosten entstehen. Zu einer Vergleichmäßigung der Behandlung ist in vorteilhafterweise noch vorgesehen, dass der zweite Druckreaktor oben einen Krawattenwärmetaucher 9 aufweist sowie mehrere darunterliegende Strömungseinbauten.

Die Mischung, die dem zweiten Druckreaktor 5 am konisch zulaufenden Boden entnommen wird, wird dann in die Mischvorrichtung 6 überführt. Die Mischvorrichtung verfügt gleichzeitig über einen Zugang für Frischlactam, sodass das Frischlactam mit dem Extraktwasser vermischt werden kann. Das Mischungsverhältnis wird so eingestellt, dass ein Restoligomerengehalt in der Mischvorrichtung 6 von max. 0,45 Gew.-%, insbesondere von 0,40 Gew.-% entsteht. Im vorliegenden Falle wird somit knapp mehr als die dreifache Menge an Frischlactam zugemischt. Die Mischvorrichtung kann als Mixingtank oder als statisches Mischersystem mit mind. einem Mischer ausgebildet sein. Die Mischvorrichtung ist beheizt und führt zu kurzen Verweilzeiten im Bereich von 20 bis 40 Minuten. Vorteilhafterweise wird das Frischlactam (Virgin Carpolactam in der Figur 2), bevor es in die Mischvorrichtung 6 überführt wird, auf eine Temperatur von 220 bis 230 °C vorgeheizt. Auf diese Weise ist der Temperaturunterschied der einzelnen Komponenten, die in der Mischvorrichtung zusammengemischt werden, nicht so groß. Das Prepolymer, das den zweiten Druckreaktor 5 verlässt, besitzt nämlich üblicherweise eine Temperatur von 255 bis 265°C. Aufgrund der geringen Temperaturunterschiede sind die Risiken des plötzlichen Verdampfens des Restwassers ("Flashing") und des Einfrieren des Produktstroms weitgehend beseitigt.

Der Boden der Mischvorrichtung 6, die die letzte Stufe der Repolymerisationsvorrichtung darstellt, ist nun - zwecks Druckregelung - kopfseitig mit dem Polymerisationsreaktor 1 verbunden. Der Polymerisationsreaktor 1 ist als sogenanntes VK-Rohr ausgebildet. Das VK-Rohr kann dabei drucklos oder auch als Druckstufe ausgebildet sein. Die Polykondensation im VK-Rohr erfolgt bei einer Temperatur im Kopf des VK-Rohrs von 240 bis 260 °C und bei einem Druck im Kopf des VK-Rohrs von 1,05 bis 1,10 bar. Die Reaktionsdauer beträgt von 18 bis 20 Stunden.

Das Polyamid, das das VK-Rohr 1 am konischen Boden verlässt, besitzt eine Temperatur von 242 bis 246 °C und weist lediglich einen Oligomerenanteil von kleiner oder gleich 0,65 Gew.-% auf. Derartige Polyamide sind ausgezeichnet geeignet zur Herstellung von hochwertigen Produkten wie textilen POY-Filamenten.

Wie aus der Figur 2 hervorgeht, ist das VK-Rohr 1 mit einem Rührelement 14A und mit einer innen liegenden Heizung (Robertsverdampfer) 14B, sowie einer Polymerkühlung 13 versehen.

Am Kopf des VK-Rohres 1 ist eine Rektifikationskolonne 12 angeordnet. In dieser Kolonne werden die aus dem VK-Rohr abgezogenen Dämpfe rektifiziert und dann dem technischen Abwasser zugeführt.

## Patentansprüche

1. Repolymerisationsvorrichtung (1) zum Aufarbeiten von Oligomeren enthaltenden Extraktwässern aus der PA 6-Herstellung, die mit einem Polykondensationsreaktor für PA 6 verbindbar ist, umfassend mindestens einen ersten Druckreaktor (20), der Mischelemente (21) und eine Heizvorrichtung (22) und mindestens einen zweiten Druckreaktor (30), der innenliegende Strömungseinbauten (31) für eine Vergleichmäßigung der Verweilzeiten aufweist.

2. Repolymerisationsvorrichtung nach Anspruch 1, **dadurch gekennzeichnet, dass** der erste Druckreaktor (20) und /oder der zweite Druckreaktor (30) mit einer gemeinsamen Rektifikationskolonne (40) verbunden sind, oder jeweils eigene Rektifikationskolonnen aufweisen.

3. Repolymerisationsvorrichtung nach mindestens einem der Ansprüche 1 oder 2, **dadurch gekennzeichnet, dass** der erste Druckreaktor (20) mit dem zweiten Druckreaktor (30) direkt über einen Strömungsregler (50) verbunden ist.

4. Repolymerisationsvorrichtung nach mindestens einem der Ansprüche 1 bis 3, **dadurch gekennzeichnet, dass** die Druckreaktoren (20, 30) als zylindrische Druckbehälter ausgebildet sind.

5. Repolymerisationsvorrichtung nach mindestens einem der Ansprüche 1 bis 4, **dadurch gekennzeichnet, dass** der zweite Druckreaktor (30) kopfseitig mit einer Heizvorrichtung versehen ist.

6. Repolymerisationsvorrichtung nach mindestens einem der Ansprüche 1 bis 5 **dadurch gekennzeichnet, dass** dem ersten Druckreator (20) und den zweiten Druckreaktor (30) in Prozessrichtung eine Eindampfvorrichtung vorgeschaltet ist, die kopfseitig mit dem ersten Druckreaktor (20) verbunden ist.

7. Repolymerisationsvorrichtung nach mindestens einem der Ansprüche 1 bis 6, **dadurch gekennzeichnet, dass** dem zweiten Druckreaktor (30) in Prozessrichtung eine Mischvorrichtung nachgeschaltet ist, die mit dem Boden des zweiten Druckreaktors (30) verbunden ist.

8. Repolymerisationsvorrichtung nach Anspruch 7, **dadurch gekennzeichnet, dass** die Mischvorrichtung Mischelemente aufweist.

## Claims

1. Repolymerisation device (1) for reprocessing extract waters from PA6 production comprising oligomers, which is connectable to a polycondensation reactor for PA6, comprising at least one first pressure reactor (20) which has mixing elements (21) and a heating device (22) and at least one second pressure reactor (30), which has internal flow inserts (31) for evening out the dwell times.

2. Repolymerisation device according to claim 1, **characterised in that** the first pressure reactor (20) and/or the second pressure reactor (30) are connected to a common rectification column (40) or have respectively separate rectification columns.

3. Repolymerisation device according to at least one of the claims 1 or 2, **characterised in that** the first pressure reactor (20) is connected to the second pressure reactor (30) directly via a flow regulator (50).

4. Repolymerisation device according to at least one of the claims 1 to 3, **characterised in that** the pressure reactors (20, 30) are configured as cylindrical pressure containers.

5. Repolymerisation device according to at least one of the claims 1 to 4, **characterised in that** the second pressure reactor (30) is provided with a heating device at the top-side.

6. Repolymerisation device according to at least one of the claims 1 to 5, **characterised in that**, in front of the first pressure reactor (20) and the second pressure reactor (30) in the process direction, an evaporation device is connected, which is connected at the top-side to the first pressure reactor (20).

7. Repolymerisation device according to at least one of the claims 1 to 6, **characterised in that**, subsequent to the second pressure reactor (30) in the process direction, a mixing device is connected, which is connected to the base of the second pressure reactor (30).

8. Repolymerisation device according to claim 7, **characterised in that** the mixing device has mixing elements.

## Revendications

1. Dispositif de repolymérisation (1) pour le traitement d'eaux d'extraction, contenant des oligomères, provenant de la fabrication du PA 6, qui peut être relié à un réacteur de polycondensation du PA 6, comprenant au moins un premier réacteur sous pression (20), des éléments mélangeurs (21) et un dispositif de chauffage (22), et au moins un deuxième réacteur sous pression (30), qui présente des éléments internes d'écoulement (31) destinés à homogénéiser les temps de séjour.

2. Dispositif de repolymérisation selon la revendication 1, **caractérisé en ce que** le premier réacteur sous pression (20) et/ou le deuxième réacteur sous pression (30) sont reliés à une colonne de rectification commune (40), ou que chacun d'eux présente ses propres colonnes de rectification.

3. Dispositif de repolymérisation selon au moins l'une des revendications 1 ou 2, **caractérisé en ce que** le premier réacteur sous pression (20) est relié au deuxième réacteur sous pression (30), directement par l'intermédiaire d'un régulateur d'écoulement (50).

4. Dispositif de repolymérisation selon au moins l'une des revendications 1 à 3, **caractérisé en ce que** les réacteurs sous pression (20, 30) sont conçus comme des récipients sous pression cylindriques.

5. Dispositif de repolymérisation selon au moins l'une des revendications 1 à 4, **caractérisé en ce que** le deuxième réacteur sous pression (30) est pourvu en tête d'un dispositif de chauffage.

6. Dispositif de repolymérisation selon au moins l'une des revendications 1 à 5, **caractérisé en ce qu'**en amont du premier réacteur sous pression (20) et du deuxième réacteur sous pression (30), dans la direction du procédé, est installé un dispositif d'évaporation, qui est relié en tête au premier réacteur sous pression (20).

7. Dispositif de repolymérisation selon au moins l'une des revendications 1 à 6, **caractérisé en ce qu'**en aval du deuxième réacteur sous pression (30), dans la direction du procédé, est installé un dispositif mélangeur, qui est relié au fond du deuxième réacteur sous pression (30).

8. Dispositif de repolymérisation selon la revendication 7, **caractérisé en ce que** le dispositif mélangeur comprend des éléments mélangeurs.
